# EUROPÄISCHE PATENTANMELDUNG

(11) **EP 4 506 152 A1**
(43) Veröffentlichungstag der Anmeldung: **12.02.2025**
(21) Anmeldenummer: 24193393.6
(22) Anmeldetag: 07.08.2024
(51) Int. Cl.: B32B 1/08, B32B 5/02, B32B 7/02, B32B 25/08, B32B 25/10, B32B 27/34

(54) **FLUIDSCHLAUCH MIT EINER GASDIFFUSIONSSPERRE**

(30) Priorität: 10.08.2023 DE 102023121465
(71) Anmelder: VERITAS AG, 63571 Gelnhausen (DE)
(72) Erfinder: VAN HOOREN, Dr. Marc, 63579 Freigericht (DE); ROSEMANN, Michael, 63594 Hasselroth (DE)
(74) Vertreter: Patentship Patentanwaltsgesellschaft mbH

(57) **Zusammenfassung**

Die vorliegende Erfindung betrifft einen Fluidschlauch (100) zum Leiten eines Fluids, mit: einer Außenschicht (101), welche ein Elastomer umfasst; einem Festigkeitsträger (103), welcher innerhalb der Außenschicht (101) angeordnet ist; einer Zwischenschicht (105), welche ein Elastomer umfasst, und welche innerhalb des Festigkeitsträgers (103) angeordnet ist, und einer Sperrschicht (107), welche innerhalb der Zwischenschicht (105) angeordnet ist und welche einen Leitungsinnenraum (109) des Fluidschlauchs (100) zum Leiten des Fluids begrenzt, wobei die Sperrschicht (107) ausgebildet ist, eine Diffusion von Gas durch die Sperrschicht (107) zu reduzieren, und wobei die Sperrschicht (107) ein Polyarylamid (PARA) umfasst.

## Beschreibung

Die vorliegende Erfindung betrifft einen Fluidschlauch mit einer Gasdiffusionssperre, insbesondere einen Fluidschlauch zum Leiten eines Fluids, insbesondere einen Kühlmittelschlauch, welcher ausgebildet ist, Kühlmittel, insbesondere Wasser oder ein Wasser-Glykol-Gemisch, fluorierte Kältemittel, Propan oder Kohlendioxid, zu leiten, und welcher eine Sperrschicht aufweist, welche ausgebildet ist, eine Diffusion von Gas durch die Sperrschicht zu reduzieren.

Fluidschläuche werden in einer Vielzahl von Anwendungsgebieten verwendet, um Fluid zu transportieren, beispielsweise in Wasserstoff- oder Kraftstoff-führenden Leitungen in einem Fahrzeug oder in Kühlmittel-führenden Leitungen in einer Klimaanlage, in einem Gebäudeklimasystem oder in einer Wärmepumpe.

Bei der Leitung von Wasserstoff oder Kraftstoff durch entsprechende Fluidschläuche besteht die Notwendigkeit die Diffusion von Wasserstoff, bzw. von gasförmigen Bestandteilen des Kraftstoffs, durch die Schlauchwandung der entsprechenden Fluidschläuche zu reduzieren.

Entsprechende Fluidschläuche sind ferner oftmals durch metallische Verbindungselemente mit anderen fluidführenden Bauteilen verbunden, wobei das Metall der metallischen Verbindungselemente korrosionsanfällig ist. Somit besteht auch in diesem Anwendungsfall ein Bedarf, die Diffusion von Gas, insbesondere von Sauerstoff, durch entsprechende Fluidschläuche in das geleitete Fluid zu minimieren, um einer Korrosion der metallischen Verbindungselemente entgegenzuwirken.

Es ist die der Erfindung zugrundeliegende Aufgabe, einen Fluidschlauch bereitzustellen, welcher eine hohe Sperrwirkung gegenüber Gasen aufweist.

Diese Aufgabe wird durch die Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch ein Fluidschlauch zum Leiten eines Fluids gelöst, mit einer Außenschicht, welche ein Elastomer umfasst; einem Festigkeitsträger, welcher innerhalb der Außenschicht angeordnet ist; einer Zwischenschicht, welche ein Elastomer umfasst, und welche innerhalb des Festigkeitsträgers angeordnet ist, und einer Sperrschicht, welche innerhalb der Zwischenschicht angeordnet ist und welche einen Leitungsinnenraum des Fluidschlauchs zum Leiten des Fluids begrenzt, wobei die Sperrschicht ausgebildet ist, eine Diffusion von Gas durch die Sperrschicht zu reduzieren, und wobei die Sperrschicht ein Polyarylamid (PARA) umfasst.

Dadurch wird beispielsweise der technische Vorteil erreicht, dass ein Fluidschlauch bereitgestellt werden kann, welcher nur eine äußerst geringe Diffusion von Gas, insbesondere von Sauerstoff und/oder Wasserdampf und/oder Propan und/oder Kohlendioxid und/oder gasförmigen fluorierten Kältemitteln, durch die Schlauchwandung des Fluidschlauchs zulässt, so dass der Fluidschlauch eine wirksame Sperrwirkung gegenüber Gas aufweist.

Die wirksame Gassperrwirkung des Fluidschlauchs wird hierbei durch die Verwendung von Polyarylamid (PARA) in der Sperrschicht des Fluidschlauchs bereitgestellt. Die Sperrschicht grenzt den Fluidschlauch gegenüber dem Leitungsinnenraum des Fluidschlauchs ab und reduziert sowohl eine Diffusion von Gas, insbesondere von Sauerstoff und/oder Wasserdampf, von außerhalb des Fluidschlauchs durch die Sperrschicht in das geleitete Fluid, und reduziert auch eine Diffusion von Gas, insbesondere von Wasserstoff und/oder flüchtigen Bestandteilen von Kraftstoff und/oder Propan und/oder Kohlendioxid und/oder gasförmigen fluorierten Kältemitteln, aus dem Leitungsinnenraum durch die Sperrschicht in den Außenraum des Fluidschlauchs.

Zudem weist die Sperrschicht eine hohe Temperaturbeständigkeit auf, so dass sich der Fluidschlauch in einem breiten Temperaturbereich des durch den Leitungsinnenraum geführten Fluids einsetzen lässt.

Somit wird ein Fluidschlauch bereitgestellt, welcher eine wirksame Beständigkeit gegenüber dem Fluid aufweist, welches durch den Leitungsinnenraum des Fluidschlauchs geleitet wird, welcher eine wirksame mechanische Beständigkeit gegenüber äußeren Einflüssen aufweist, und welcher hohen Temperaturen und Drücken wirksam widerstehen kann.

Der Festigkeitsträger, welcher zwischen der Außenschicht und der Zwischenschicht des Fluidschlauchs angeordnet ist, stellt eine wirksame strukturelle Stabilität des Fluidschlauchs sicher. Der Festigkeitsträger stellt sicher, dass auch wenn das Fluid mit einem hohen Druck durch den Fluidschlauch geleitet wird, die strukturelle Integrität des Fluidschlauchs nicht beeinträchtigt wird. Dies wird dadurch gewährleistet, dass der Festigkeitsträger auf den Fluidschlauch wirkende Druckkräfte wirksam aufnehmen kann.

Das Elastomer der Außenschicht und der Zwischenschicht des Fluidschlauchs stellt zusammen mit dem Festigkeitsträger ferner eine vorteilhafte Verformbarkeit des Fluidschlauchs sicher, und verbessert zudem die Gasbarriereeigenschaften des Fluidschlauchs.

Die Zwischenschicht des Fluidschlauchs gemäß der vorliegenden Erfindung, welche zwischen dem Festigkeitsträger und der Sperrschicht angeordnet ist, stellt einen wirksamen Verbund zwischen dem Festigkeitsträger und der Sperrschicht sicher.

In einer vorteilhaften Ausführungsform ist das Polyarylamid (PARA) der Sperrschicht als ein schlagzähmodifiziertes teilaromatisches Polyarylamid (PARA) ausgebildet.

Dadurch wird der technische Vorteil erreicht, dass ein schlagzähmodifiziertes teilaromatisches Polyarylamid (PARA) eine besonders wirksame Gassperrwirkung der Sperrschicht des Fluidschlauchs sicherstellt bei gleichzeitiger Flexibilität.

In einer vorteilhaften Ausführungsform ist das Polyarylamid (PARA) der Sperrschicht durch Polymerisation von Adipinsäure und 1,3-Xylendiamin ausgebildet.

Dadurch wird der technische Vorteil erreicht, dass das entsprechend erhaltene Polyarylamid (PARA) eine optimale Gassperrwirkung der Sperrschicht des Fluidschlauchs ermöglicht.

In einer vorteilhaften Ausführungsform ist das Elastomer der Außenschicht und/oder der Zwischenschicht ausgewählt aus der Gruppe umfassend Ethylen-Propylen-Dien-Kautschuk (EPDM), Isopren-Isopren-Kautschuk (IIR), Epichlorhydrin-Elastomer (ECO, CO) und Mischungen davon, insbesondere Epichlorhydrin-Elastomer (ECO, CO).

Dadurch wird der technische Vorteil erreicht, dass die genannten Elastomere einen wirksamen Schutz der weiter innen liegenden Schichten des Fluidschlauchs bereitstellen, und eine ausreichende Verformbarkeit, insbesondere elastische Verformbarkeit des Fluidschlauchs, ermöglichen. Zudem verbessern die genannten Elastomere die Gasbarriereeigenschaften des Fluidschlauchs.

In einer vorteilhaften Ausführungsform umfasst das Epichlorhydrin-Elastomer (ECO, CO) Copolymere aus Epichlorhydrin und Ethylenoxid (ECO), Homopolymer Epichlorhydrin-Elastomer (CO), oder Mischungen von Copolymeren aus Epichlorhydrin und Ethylenoxid (ECO) und einem Homopolymer Epichlorhydrin-Elastomer (CO).

Dadurch wird der technische Vorteil erreicht, dass durch die genannten Varianten des Epichlorhydrin-Elastomers (ECO, CO) der Außenschicht und/oder der Zwischenschicht wirksame Eigenschaften des Fluidschlauchs bereitgestellt werden können. Zudem können durch die genannten Elastomere die Gasbarriereeigenschaften des Fluidschlauchs optimiert werden.

In einer vorteilhaften Ausführungsform ist das Epichlorhydrin-Elastomer (ECO, CO) ein vernetztes Epichlorhydrin-Elastomer (ECO, CO), insbesondere ein bisphenolisch vernetztes Epichlorhydrin-Elastomer (ECO, CO).

Dadurch wird der technische Vorteil erreicht, dass durch das vernetzte, insbesondere bisphenolisch vernetze, Epichlorhydrin-Elastomer (ECO, CO) eine wirksame Haftung der Außenschicht, bzw. der Zwischenschicht an den angrenzenden Schichten des Fluidschlauchs erreicht wird, so dass auf die Verwendung von zusätzlichen Haftvermittlern verzichtet werden kann und ein direkter chemischer Verbund bei der Vulkanisation entsteht.

In einer vorteilhaften Ausführungsform umfasst das bisphenolisch vernetzte Epichlorhydrin-Elastomer (ECO, CO) ein Vernetzungsmittel, insbesondere 4-4'-Sulfonyldiphenol, und einen Aktivator, insbesondere Allyltributylphosphoniumchlorid.

Dadurch wird der technische Vorteil erreicht, dass durch das genannte Vernetzungsmittel und den genannten Aktivator eine besonders vorteilhafte Vernetzung der Zwischenschicht und/oder der Außenschicht erreicht wird bei gleichzeitiger untrennbarer Haftung zur Innenschicht aus Polyarylamid (PARA) entsteht.

In einer vorteilhaften Ausführungsform ist der Fluidschlauch als ein frei verformbarer Fluidschlauch, insbesondere elastisch verformbarer Fluidschlauch, ausgebildet.

Dadurch wird der technische Vorteil erreicht, dass durch die freie, insbesondere elastische, Verformbarkeit des Fluidschlauchs eine wirksame Bauraum-optimierte Anpassung des Fluidschlauchs an die jeweilige Bauraumsituation erreicht werden kann.

In einer vorteilhaften Ausführungsform ist der Festigkeitsträger als ein einlagiger oder mehrlagiger Festigkeitsträger ausgebildet, und wobei der Festigkeitsträger insbesondere ein Gewebe, Gewirk, Geflecht, Gestrick und/oder eine spiralisierte Textileinlage aufweist.

Dadurch wird der technische Vorteil erreicht, dass durch die entsprechende Lagenausbildung, bzw. durch die Wahl der Textilien eine besonders vorteilhafte Stabilität des Festigkeitsträgers erreicht werden kann.

In einer vorteilhaften Ausführungsform weist der Festigkeitsträger aromatische oder aliphatische Polyamid-Fasern, Polyoxadiazol-Fasern, Polyester-Fasern, Polyphenylensulfid-Fasern, Aramid-Fasern, insbesondere meta-Aramid-Faser und/oder para-Aramid-Fasern, Polyimid-Fasern, Polyvinylacetal-Fasern, Polyetheretherketon-Fasern, Glasfasern oder Mischungen davon, auf.

Dadurch wird der technische Vorteil erreicht, dass durch die entsprechenden Fasern vorteilhafte Stabilitätseigenschaften des Fluidschlauchs gewährleistet werden.

In einer vorteilhaften Ausführungsform weist der Fluidschlauch eine Barrierewirkung gegenüber Sauerstoff auf, wobei insbesondere die Barrierewirkung des Fluidschlauchs gegenüber Sauerstoff gemäß der Norm DIN 53380-3: 1998-07 weniger als 10 cm³ / (m²·d·bar) beträgt, bevorzugt weniger als 5 cm³ / (m²·d·bar), weiter bevorzugt weniger als 3 cm³ / (m²·d·bar), noch weiter bevorzugt weniger als 2 cm³ / (m²·d·bar) und am meisten bevorzugt weniger als 1 cm³ / (m²·d·bar).

Dadurch wird der technische Vorteil erreicht, dass entsprechende niedrige Sauerstoffdiffusionsraten das Eindringen von Sauerstoff in den Fluidschlauch erschweren, und damit die hohe Gassperrwirkung des Fluidschlauchs vorteilhaft charakterisieren, bzw. eine Korrosion der metallischen Anbindungselemente wirkungsvoll verhindern.

In einer vorteilhaften Ausführungsform weist der Fluidschlauch eine Barrierewirkung gegenüber Wasserdampf, fluorierten Kältemitteln, Propan und/oder Kohlendioxid auf.

Dadurch wird der technische Vorteil erreicht, dass die Verwendung von Polyarylamid (PARA) in der Sperrschicht, insbesondere im Gegensatz zu herkömmlich verwendeten EVOH-Sperrschichten, eine deutlich geringere Wasseraufnahme des Fluidschlauchs bewirkt, was aufgrund der funktionalen Wechselwirkung zwischen Wasseraufnahme und Sauerstoffdiffusion zu konstant geringen Sauerstoffdiffusionswerten führt. Zudem stellt eine Barrierewirkung der Sperrschicht gegenüber Wasserdampf, fluorierten Kältemitteln, Propan und/oder Kohlendioxid eine vorteilhafte Einsetzbarkeit des Fluidschlauchs in einer Vielzahl von Anwendungsmöglichkeiten sicher.

In einer vorteilhaften Ausführungsform weist der Fluidschlauch keine Metallumflechtung auf.

Dadurch wird der technische Vorteil erreicht, dass eine Vereinfachung und damit kostengünstigere Herstellung des Fluidschlauchs erreicht wird.

In einer vorteilhaften Ausführungsform ist der Fluidschlauch ein Kühlmittelschlauch, welcher ausgebildet ist, Kühlmittel, insbesondere ein Wasser-Glykol-Gemisch, zu leiten.

Dadurch wird der technische Vorteil erreicht, dass sich eine Vielzahl von Anwendungsmöglichkeiten des Fluidschlauchs in dem Bereich der Klima- und Heizungstechnik ergeben.

In einer vorteilhaften Ausführungsform ist der Fluidschlauch ein Kältemittelschlauch, welcher ausgebildet ist, Kältemittel, insbesondere fluorierte Kältemittel, Propan oder Kohlendioxid, zu leiten.

Dadurch wird der technische Vorteil erreicht, dass sich eine Vielzahl von Anwendungsmöglichkeiten des Fluidschlauchs in dem Bereich der Klima- und Heizungstechnik ergeben.

In einer vorteilhaften Ausführungsform weist der Fluidschlauch einen Betriebsdruck zwischen 0 und 8 bar auf.

In einer vorteilhaften Ausführungsform weist der Fluidschlauch einen Berstdruck von mehr als 150 bar auf.

Dadurch wird der technische Vorteil erreicht, dass sich der Fluidschlauch für Hochdruckanwendungen eignet.

In einer vorteilhaften Ausführungsform weist der Fluidschlauch eine Betriebstemperatur von maximal 125 °C und/oder von mindestens -40°C auf.

Dadurch wird der technische Vorteil erreicht, dass sich der Fluidschlauch sowohl für Hochtemperatur- als auch für Tieftemperaturanwendungen eignet.

Gemäß einem zweiten Aspekt der Erfindung wird die Aufgabe durch ein Verfahren zum Herstellen eines Fluidschlauchs zum Leiten eines Fluids gelöst, umfassend die folgenden Schritte: Extrudieren einer Sperrschicht, welche einen Leitungsinnenraum des Fluidschlauchs zum Leiten des Fluids begrenzt, wobei die Sperrschicht ausgebildet ist, eine Diffusion von Gas durch die Sperrschicht zu reduzieren, und wobei die Sperrschicht ein Polyarylamid (PARA) umfasst; Extrudieren einer Zwischenschicht auf der Sperrschicht, wobei die Zwischenschicht ein Elastomer umfasst, Anordnen eines Festigkeitsträgers auf der Zwischenschicht; und Extrudieren einer Außenschicht auf dem Festigkeitsträger, wobei die Außenschicht ein Elastomer umfasst.

Dadurch wird der technische Vorteil erreicht, dass ein Fluidschlauch mit einer wirksamen Gassperrwirkung bereitgestellt wird.

Die für den Fluidschlauch gemäß dem ersten Aspekt angeführten Ausführungsformen sind ebenso Ausführungsformen für das Verfahren zum Herstellen eines Fluidschlauchs gemäß dem zweiten Aspekt.

Ausführungsbeispiele der Erfindung sind in den Zeichnungen dargestellt und werden im Folgenden näher beschrieben.

Es zeigen:
- Fig. 1: eine perspektivische Ansicht eines Fluidschlauchs gemäß einer Ausführungsform; und
- Fig. 2: eine schematische Darstellung eines Verfahrens zum Herstellen eines Fluidschlauchs.

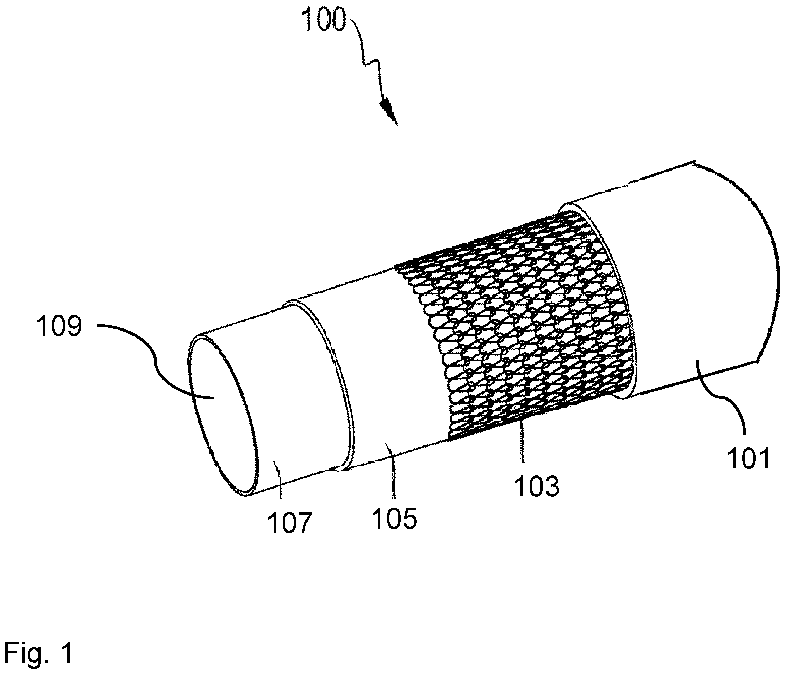

Fig. 1 zeigt eine perspektivische Ansicht eines Fluidschlauchs 100 gemäß einer Ausführungsform.

Der Fluidschlauch 100 gemäß der vorliegenden Erfindung zeichnet sich insbesondere durch eine hohe Sperrwirkung gegenüber Gasen auf, so dass eine Diffusion von Gas durch den Fluidschlauch 100 in den Leitungsinnenraum 109 des Fluidschlauchs 100 signifikant reduziert ist. Die Sperr- bzw. Barrierewirkung des Fluidschlauchs 100 gegenüber Gasen gemäß der vorliegenden Erfindung erstreckt sich insbesondere auf Sauerstoff, Erdgas, Kraftstoffdampf, Wasserstoff, Wasserdampf, fluorierte Gase und/oder Kältemittel, wie insbesondere fluorierte Kältemittel, Propan oder Kohlendioxid, so dass der Fluidschlauch 100 gemäß der vorliegenden Erfindung in einer Vielzahl von Anwendungsgebieten eingesetzt werden kann.

Die Sperr-, bzw. Barrierewirkung des Fluidschlauchs 100 gegenüber Gasen gemäß der vorliegenden Erfindung erstreckt sich hierbei sowohl auf die Verhinderung, bzw. Reduzierung der Diffusion von Gas aus dem Leitungsinnenraum 109 des Fluidschlauchs 100 in einen Außenbereich des Fluidschlauchs 100, als auch auf die Verhinderung, bzw. Reduzierung der Diffusion von Gas von dem Außenbereich des Fluidschlauchs 100 in den Leitungsinnenraum 109 des Fluidschlauchs 100 hinein.

In Fahrzeugen kann der Fluidschlauch 100 beispielsweise zur Leitung von Wasserstoff oder Kraftstoff eingesetzt werden, um die Diffusion des geleiteten Wasserstoffs, bzw. von flüchtigen Bestandteilen des geleiteten Kraftstoffs aus dem Fluidschlauch zu verhindern.

Der Fluidschlauch 100 gemäß der vorliegenden Erfindung kann jedoch unabhängig vom Fahrzeugbau auch allgemein in der Heizungs- und Klimatechnik eingesetzt werden, beispielsweise als Kühlmittelschlauch in Klimaanlagen, Gebäudeklimatisierungssystemen und Wärmepumpen, um eine Diffusion von Sauerstoff von dem Außenbereich des Fluidschlauchs 100 in den Leitungsinnenraum 109 des Fluidschlauchs 100 hinein zu verhindern, bzw. zu reduzieren, und dadurch eine Korrosion von metallischen an den Fluidschlauch 100 angeschlossenen Fluidverbindungselementen wirksam zu verhindern, bzw. zu reduzieren.

Der Fluidschlauch 100 gemäß der vorliegenden Erfindung kann jedoch auch zur Leitung von Kältemitteln, wie fluorierten Kältemitteln, Propan oder Kohlendioxid, eingesetzt werden. Zudem weist der Fluidschlauch 100 gemäß der vorliegenden Erfindung eine wirksame Verformbarkeit und hohe Flexibilität auf, was die Anwendung des Fluidschlauchs 100 in beengten Bauraumsituationen ermöglicht.

Insbesondere ist der Fluidschlauch 100 als ein frei verformbarer Fluidschlauch 100, insbesondere elastisch verformbarer Fluidschlauch 100, ausgebildet.

Die hervorragende Sperr-, bzw. Barrierewirkung des Fluidschlauchs 100 gemäß der vorliegenden Erfindung gegenüber Gasen wird durch die Verwendung von Polyarylamid (PARA), als Material der den Leitungsinnenraum 109 des Fluidschlauchs 100 begrenzenden Sperrschicht 107, in Kombination mit gasdichten Elastomeren insbesondere ECO der Zwischenschicht und Außenschicht erreicht, wie nachfolgend beschrieben wird.

Polyarylamid (PARA) zeichnet sich im Gegensatz zu herkömmlich in Fluidschläuchen, insbesondere Kühlmittelschläuchen, verwendeten EVOH-Sperrschichten durch eine geringe Wasseraufnahme und dadurch durch eine konstant hohe Sperrwirkung gegenüber Sauerstoff aus.

Der in der Fig. 1 dargestellte Fluidschlauch 100 weist eine aus einem Elastomer gebildete Außenschicht 101 auf, welche ausgebildet ist, den Fluidschlauch 100 vor äußeren mechanischen und chemischen Einflüssen wirksam zu schützen.

Der Fluidschlauch 100 weist ferner einen Festigkeitsträger 103 auf, welcher innerhalb der Außenschicht 101 angeordnet ist, und welcher ausgebildet ist, auf den Fluidschlauch 100 wirkende Kräfte wirksam aufzunehmen.

Insbesondere kann der Festigkeitsträger 103 als ein einlagiger oder mehrlagiger Festigkeitsträger 103 ausgebildet sein, und kann der Festigkeitsträger 103 insbesondere ein Gewebe, Gewirk und/oder Gestrick umfassen.

Insbesondere kann der Festigkeitsträger 103 aromatische oder aliphatische Polyamid-Fasern, Polyoxadiazol-Fasern, Polyester-Fasern, Polyphenylensulfid-Fasern, Aramid-Fasern, insbesondere meta-Aramid-Faser und/oder para-Aramid-Fasern, Polyimid-Fasern, Polyvinylacetal-Fasern, Polyetheretherketon-Fasern, Glasfasern oder Mischungen davon umfassen.

Insbesondere kann der Fluidschlauch 100 einen ersten und einen weiteren Festigkeitsträger 103 aufweisen, welcher zwischen der Zwischenschicht 105 und der Außenschicht 101 angeordnet sind.

Durch den Festigkeitsträger 103 kann eine wirksame mechanische Stabilisierung des Fluidschlauchs 100 sichergestellt werden, und der Fluidschlauch 100 kann auch Fluide mit einem hohen Druck leiten.

Insbesondere kann durch die Verwendung des Festigkeitsträgers 103 auf eine in herkömmlichen Fluidschläuchen 100 oftmals verwendete und kostenintensive äußere Metallumflechtung verzichtet werden.

Der Fluidschlauch 100 gemäß der vorliegenden Offenbarung weist ferner eine Zwischenschicht 105 auf, welche innerhalb des Festigkeitsträgers 103 angeordnet ist, und welche ausgebildet ist, einen wirksamen Verbund zwischen dem Festigkeitsträger 103 und der weiter innen liegenden Sperrschicht 107 des Fluidschlauchs 100 bereitzustellen.

Insbesondere ist das Elastomer der Außenschicht 101 und/oder der Zwischenschicht 105 ausgewählt ist aus der Gruppe umfassend Ethylen-Propylen-Dien-Kautschuk (EPDM), Isopren-Isopren-Kautschuk (IIR), Epichlorhydrin-Elastomer (ECO, CO) und Mischungen davon, insbesondere Epichlorhydrin-Elastomer (ECO, CO).

Hierbei umfasst das Epichlorhydrin-Elastomer (ECO, CO) der Außenschicht (101) und/oder der Zwischenschicht 105 insbesondere Copolymere aus Epichlorhydrin und Ethylenoxid (ECO), Homopolymer Epichlorhydrin-Elastomer (CO), oder Mischungen von Copolymeren aus Epichlorhydrin und Ethylenoxid (ECO) und Homopolymer Epichlorhydrin-Elastomer (CO).

Insbesondere ist das Epichlorhydrin-Elastomer (ECO, CO) ein vernetztes Epichlorhydrin-Elastomer (ECO, CO), insbesondere ein bisphenolisch vernetztes Epichlorhydrin-Elastomer (ECO, CO), wobei das bisphenolisch vernetzte Epichlorhydrin-Elastomer (ECO, CO) ein Vernetzungsmittel, insbesondere 4-4'-Sulfonyldiphenol, und einen Aktivator, insbesondere Allyltributylphosphoniumchlorid, umfasst.

Die Verwendung von vernetztem Epichlorhydrin-Elastomer (ECO, CO) in der Außenschicht 101 ermöglicht eine direkte Haftung der entsprechenden Außenschicht 101 an dem innenliegenden Festigkeitsträger 103, bzw. die Verwendung von vernetztem Epichlorhydrin-Elastomer (ECO, CO) in der Zwischenschicht 105 ermöglicht eine direkte Haftung der entsprechenden Zwischenschicht 105 an dem Festigkeitsträger 103 und an der Sperrschicht 107.

Somit kann aufgrund der Verwendung des vernetzten Epichlorhydrin-Elastomers (ECO, CO) in der Außenschicht 101 und/oder Zwischenschicht 105 auf Haftvermittler in dem Fluidschlauch 100 verzichtet werden.

Der Fluidschlauch 100 weist ferner eine Sperrschicht 107 auf, welche innerhalb der Zwischenschicht 105 angeordnet ist und welche einen Leitungsinnenraum 109 des Fluidschlauchs 100 zum Leiten des Fluids begrenzt, wobei die Sperrschicht 107 ausgebildet ist, eine Diffusion von Gas durch die Sperrschicht 107 zu reduzieren.

Wie bereits ausgeführt wurde, wird die Diffusionssperrwirkung des Fluidschlauchs 100 dadurch erreicht, dass die Sperrschicht 107 ein Polyarylamid (PARA) umfasst. Insbesondere ist das Polyarylamid (PARA) der Sperrschicht 107 als ein schlagzähmodifiziertes teilaromatisches Polyarylamid (PARA) ausgebildet. Insbesondere wird das Polyarylamid (PARA) der Sperrschicht 107 durch Polymerisation von Adipinsäure und 1,3-Xylendiamin ausgebildet.

Hierdurch kann eine vorteilhafte Sperrwirkung gegenüber Gasen, insbesondere Sauerstoff, durch die Sperrschicht 107 erreicht werden, wie in der nachfolgenden Tabelle 1 gemäß dem Experiment 1 gezeigt ist.

Hierbei wurden im Experiment 1 drei Fluidschläuche 100 mit einem in Fig. 1 dargestellten Schichtaufbau untersucht, wobei lediglich das Material der Sperrschicht 107 variiert wurde. In allen drei Fluidschläuchen 100 besteht der Festigkeitsträger 103 aus einem Geflecht aus para-Aramid, und besteht die Außenschicht 101 und die Zwischenschicht 105 aus bisphenolisch vernetztem Epichlorhydrin-Elastomer (ECO, CO).

In dem erfindungsgemäßen Fluidschlauch 100 ("Schlauch 1") wurde als Material der Sperrschicht 107 Polyarylamid (PARA) verwendet.

In dem Fluidschlauch 100 gemäß dem Stand der Technik ("Schlauch 2") wurde als Material der Sperrschicht 107 fluoriertes thermoplastisches Elastomer Vulkanisat (F-TPE-V) verwendet.

In dem Fluidschlauch 100 gemäß dem Stand der Technik ("Schlauch 3") wurde als Material der Sperrschicht 107 Tetrafluorethylen-Hexafluorpropylen-Vinylidenfluorid Terpolymer (THV) verwendet.

Für die drei Schläuche erfolgte eine Bestimmung der Sauerstoffdurchlässigkeit gemäß der Norm DIN 53380-3: 1998-07 mit einem Gerät MOCON OX-TRAN bei einer Temperatur von 23 °C und einer relativen Feuchte des Messgases (Sauerstoff) und des Trägergases (Formiergas) von 50%. Hierbei wurden alle Schläuche vor der Messung über einen Zeitraum von mindestens 8 Stunden konditioniert. Es wurden für jeden der drei Schläuche eine Mehrzahl von Messungen durchgeführt und der jeweilige Mittelwert der Messungen gebildet.

Die Ergebnisse des Experiment 1 sind in der nachfolgenden Tabelle 1 dargestellt:

**Tabelle 1**

| **Probe** | **Sauerstoffdurchlässigkeit [cm³ / m²·d·bar]** |
|---|---|
| Schlauch 1 | 0,89 |
| Schlauch 2 | 654 |
| Schlauch 3 | 516 |

Aus der Tabelle 1 ist offensichtlich zu erkennen, dass der erfindungsgemäße Fluidschlauch 100 mit einer Sperrschicht 107 aus Polyarylamid (PARA) ("Schlauch 1") eine signifikante höhere Sperrwirkung gegenüber Sauerstoff ausweist ("Schlauch 1", Sauerstoffdurchlässigkeit 0,89 cm³ / m²·d·bar), als die herkömmlich verwendeten Materialien gemäß den Beispielen des Standes der Technik ("Schlauch 2", Sauerstoffdurchlässigkeit 654 cm³ / m²·d·bar, und "Schlauch 3", Sauerstoffdurchlässigkeit 516 cm³ / m²·d·bar).

Nachfolgend wurde ein weiteres Experiment 2 durchgeführt, dessen Ergebnisse in der nachfolgenden Tabelle 2 dargestellt sind.

In der nachfolgenden Tabelle 2 wird der Einfluss des Materials der Außenschicht 101 und der Zwischenschicht 105 auf die Gassperrwirkung der entsprechenden Fluidschläuche 100 untersucht.

Hierbei wurden sechs Fluidschläuche 100 ("Schlauch 1" bis "Schlauch 6") mit einem in Fig. 1 dargestellten Schichtaufbau untersucht, wobei das Material der Außenschicht 101 und der Zwischenschicht 105 variiert wurde. In allen sechs Fluidschläuchen 100 besteht der Festigkeitsträger 103 aus einem Geflecht aus para-Aramid, und besteht die Sperrschicht 107 aus Polyarylamid (PARA).

Alle sechs untersuchten Fluidschläuche 100 umfassen erfindungsgemäße Fluidschläuche.

In dem Schlauch 1 besteht die Außenschicht 101 und die Zwischenschicht 105 aus Isopren-Isopren-Kautschuk (IIR).

In dem Schlauch 2 besteht die Außenschicht 101 und die Zwischenschicht 105 aus einem Copolymer aus Epichlorhydrin und Ethylenoxid (ECO).

In dem Schlauch 3 besteht die Außenschicht 101 und die Zwischenschicht 105 aus Homopolymer Epichlorhydrin-Homopolymer (CO).

In dem Schlauch 4 besteht die Außenschicht 101 und die Zwischenschicht 105 aus einer Mischung umfassend 75 Gew.-% Homopolymer Epichlorhydrin-Elastomer (CO) und 25 Gew.-% eines Copolymers aus Epichlorhydrin und Ethylenoxid (ECO).

In dem Schlauch 5 besteht die Außenschicht 101 und die Zwischenschicht 105 aus einer Mischung umfassend 50 Gew.-% Homopolymer Epichlorhydrin-Elastomer (CO) und 50 Gew.-% eines Copolymers aus Epichlorhydrin und Ethylenoxid (ECO).

In dem Schlauch 6 besteht die Außenschicht 101 und die Zwischenschicht 105 aus einem Gemisch umfassend 25 Gew.-% Homopolymer Epichlorhydrin-Elastomer (CO) und 75 Gew.-% eines Copolymers aus Epichlorhydrin und Ethylenoxid (ECO).

Es wurde nachfolgend ein Gasdichtigkeitstest gemäß der Norm DIN 4762 durchgeführt, wobei die Ergebnisse für die in dem Experiment 2 verwendeten Gase Stickstoff und Luft in der nachfolgenden Tabelle 2 gezeigt sind.

**Tabelle 2**

| **Probe** | **Relativer Gaspermeationskoeffizient gemäß Index** |
|---|---|
| Schlauch 1 (Stickstoff) | 2,9 |
| Schlauch 1 (Luft) | 2,1 |
| Schlauch 2 (Stickstoff) | 6,4 |
| Schlauch 2 (Luft) | 6,2 |
| Schlauch 3 (Stickstoff) | 1,0 |
| Schlauch 3 (Luft) | 1,0 |
| Schlauch 4 (Stickstoff) | 1,7 |
| Schlauch 4 (Luft) | 1,8 |
| Schlauch 5 (Stickstoff) | 2,8 |
| Schlauch 5 (Luft) | 2,7 |
| Schlauch 6 (Stickstoff) | 4,1 |
| Schlauch 6 (Luft) | 4,3 |

Wie aus der Tabelle 2 zu entnehmen ist, wird die beste Diffusionssperrwirkung des Fluidschlauchs 100 mit einer Außenschicht 101 und einer Zwischenschicht 105 aus Homopolymer Epichlorhydrin-Elastomer (CO) erreicht (siehe "Schlauch 3", Gaspermeationskoeffizient gemäß Index sowohl für Stickstoff als auch Luft: 1,0).

Insbesondere kann der Fluidschlauch 100 als ein Extrusionsformteil geformt sein. Die Sperrschicht 107, die Zwischenschicht 105, und die Außenschicht 101 können hierbei insbesondere in separaten Extrusions-Schritten oder in einem gemeinsamen Co-Extrusionsschritt extrudiert werden.

Insbesondere können auch nur einige der Schichten, umfassend die Sperrschicht 107, die Zwischenschicht 105, und die Außenschicht 101, in einem Co-Extrusionsschritt extrudiert werden.

Somit ist der aus vier Lagen 101, 103, 105, 107 bestehende Fluidschlauch 100 als ein kostengünstiger Fluidschlauch 100 ausgebildet, welcher nicht nur eine wirksame Beständigkeit gegenüber äußeren chemischen und/oder mechanischen Einflüssen aufweist, sondern auch insbesondere eine Diffusion von Gas durch die Schlauchwandung des Fluidschlauchs 100 signifikant reduziert.

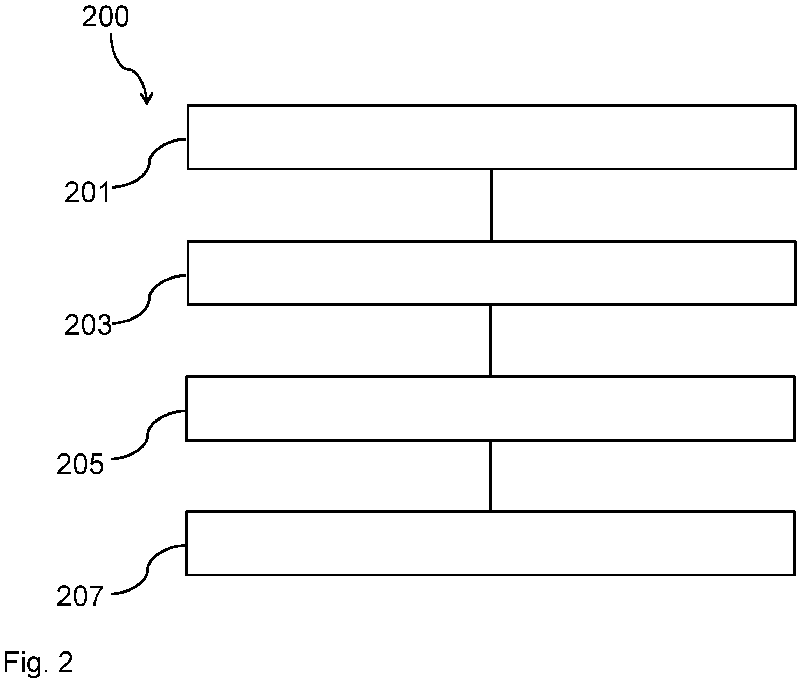

Fig. 2 zeigt eine schematische Darstellung eines Verfahrens zum Herstellen eines Fluidschlauchs.

Das Verfahren 200 umfasst als ersten Schritt das Extrudieren 201 einer Sperrschicht 107, welche einen Leitungsinnenraum 109 des Fluidschlauchs 100 zum Leiten des Fluids begrenzt, wobei die Sperrschicht 107 ausgebildet ist, eine Diffusion von Gas durch die Sperrschicht 107 zu reduzieren, und wobei die Sperrschicht 107 ein Polyarylamid (PARA) umfasst.

Das Verfahren 200 umfasst als zweiten Schritt das Extrudieren 203 einer Zwischenschicht 105 auf der Sperrschicht 107, wobei die Zwischenschicht 105 ein Elastomer umfasst.

Das Verfahren 200 umfasst als dritten Schritt das Anordnen 205 eines Festigkeitsträgers 103 auf der Zwischenschicht 105.

Das Verfahren 200 umfasst als vierten Schritt das Extrudieren 207 einer Außenschicht 101 auf dem Festigkeitsträger 103, wobei die Außenschicht 101 ein Elastomer umfasst.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Fluidschlauch
- 101: Außenschicht
- 103: Festigkeitsträger
- 105: Zwischenschicht
- 107: Sperrschicht
- 109: Leitungsinnenraum
- 200: Verfahren zum Herstellen eines Fluidschlauchs
- 201: Erster Verfahrensschritt: Extrudieren einer Sperrschicht
- 203: Zweiter Verfahrensschritt: Extrudieren einer Zwischenschicht
- 205: Dritter Verfahrensschritt: Aufbringen eines Festigkeitsträgers
- 207: Vierter Verfahrensschritt: Extrudieren einer Außenschicht

## Patentansprüche

1. Fluidschlauch (100) zum Leiten eines Fluids, mit:
einer Außenschicht (101), welche ein Elastomer umfasst;
einem Festigkeitsträger (103), welcher innerhalb der Außenschicht (101) angeordnet ist;
einer Zwischenschicht (105), welche ein Elastomer umfasst, und welche innerhalb des Festigkeitsträgers (103) angeordnet ist, und
einer Sperrschicht (107), welche innerhalb der Zwischenschicht (105) angeordnet ist und welche einen Leitungsinnenraum (109) des Fluidschlauchs (100) zum Leiten des Fluids begrenzt, wobei die Sperrschicht (107) ausgebildet ist, eine Diffusion von Gas durch die Sperrschicht (107) zu reduzieren, und wobei die Sperrschicht (107) ein Polyarylamid (PARA) umfasst.

2. Fluidschlauch (100) nach Anspruch 1, wobei das Polyarylamid (PARA) der Sperrschicht (107) als ein schlagzähmodifiziertes teilaromatisches Polyarylamid (PARA) ausgebildet ist.

3. Fluidschlauch (100) nach Anspruch 1 oder 2, wobei das Polyarylamid (PARA) der Sperrschicht (107) durch Polymerisation von Adipinsäure und 1,3-Xylendiamin ausgebildet ist.

4. Fluidschlauch (100) nach einem der vorangehenden Ansprüche, wobei das Elastomer der Außenschicht (101) und/oder der Zwischenschicht (105) ausgewählt ist aus der Gruppe umfassend Ethylen-Propylen-Dien-Kautschuk (EPDM), Isopren-Isopren-Kautschuk (IIR), Epichlorhydrin-Elastomer (ECO, CO) und Mischungen davon, insbesondere Epichlorhydrin-Elastomer (ECO, CO).

5. Fluidschlauch (100) nach Anspruch 4, wobei das Epichlorhydrin-Elastomer (ECO, CO) Copolymere aus Epichlorhydrin und Ethylenoxid (ECO), Homopolymer Epichlorhydrin-Elastomer (CO), oder Mischungen von Copolymeren aus Epichlorhydrin und Ethylenoxid (ECO) und Homopolymer Epichlorhydrin-Elastomer (CO) umfasst.

6. Fluidschlauch (100) nach Anspruch 4 oder 5, wobei das Epichlorhydrin-Elastomer (ECO, CO) ein vernetztes Epichlorhydrin-Elastomer (ECO, CO), insbesondere ein bisphenolisch vernetztes Epichlorhydrin-Elastomer (ECO, CO) ist.

7. Fluidschlauch (100) nach Anspruch 6, wobei das bisphenolisch vernetzte Epichlorhydrin-Elastomer (ECO, CO) ein Vernetzungsmittel, insbesondere 4-4'-Sulfonyldiphenol, und einen Aktivator, insbesondere Allyltributylphosphoniumchlorid, umfasst.

8. Fluidschlauch (100) nach einem der vorangehenden Ansprüche, wobei der Fluidschlauch (100) als ein frei verformbarer Fluidschlauch, insbesondere elastisch verformbarer Fluidschlauch (100), ausgebildet ist.

9. Fluidschlauch (100) nach einem der vorangehenden Ansprüche, wobei der Festigkeitsträger (103) als ein einlagiger oder mehrlagiger Festigkeitsträger (103) ausgebildet ist, und wobei der Festigkeitsträger (103) insbesondere ein Gewebe, Gewirk, Geflecht, Gestrick und/oder eine spiralisierte Textileinlage aufweist.

10. Fluidschlauch (100) nach einem der vorangehenden Ansprüche, wobei der Festigkeitsträger (103) aromatische oder aliphatische Polyamid-Fasern, Polyoxadiazol-Fasern, Polyester-Fasern, Polyphenylensulfid-Fasern, Aramid-Fasern, insbesondere meta-Aramid-Faser und/oder para-Aramid-Fasern, Polyimid-Fasern, Polyvinylacetal-Fasern, Polyetheretherketon-Fasern, Glasfasern, oder Mischungen davon, aufweist.

11. Fluidschlauch (100) nach einem der vorangehenden Ansprüche, wobei der Fluidschlauch (100) eine Barrierewirkung gegenüber Sauerstoff aufweist, wobei insbesondere die Barrierewirkung des Fluidschlauchs (100) gegenüber Sauerstoff gemäß der Norm DIN 53380-3: 1998-07 weniger als 10 cm³ / (m²·d·bar) beträgt, bevorzugt weniger als 5 cm³ / (m²·d·bar), weiter bevorzugt weniger als 3 cm³ / (m²·d·bar), noch weiter bevorzugt weniger als 2 cm³ / (m²·d·bar) und am meisten bevorzugt weniger als 1 cm³ / (m²·d·bar).

12. Fluidschlauch (100) nach einem der vorangehenden Ansprüche, wobei der Fluidschlauch (100) eine Barrierewirkung gegenüber Wasserdampf, fluorierten Kältemitteln, Propan und/oder Kohlendioxid aufweist.

13. Fluidschlauch (100) nach einem der vorangehenden Ansprüche, wobei der Fluidschlauch (100) keine Metallumflechtung aufweist.

14. Fluidschlauch (100) nach einem der vorangehenden Ansprüche, wobei der Fluidschlauch (100) ein Kühlmittelschlauch ist, welcher ausgebildet ist, Kühlmittel, insbesondere ein Wasser-Glykol-Gemisch, zu leiten.

15. Fluidschlauch (100) nach einem der vorangehenden Ansprüche, wobei der Fluidschlauch (100) ein Kältemittelschlauch ist, welcher ausgebildet ist, Kältemittel, insbesondere fluorierte Kältemittel, Propan oder Kohlendioxid, zu leiten.

16. Verfahren (200) zum Herstellen eines Fluidschlauchs (100) zum Leiten eines Fluids, umfassend die folgenden Schritte:
Extrudieren (201) einer Sperrschicht (107), welche einen Leitungsinnenraum (109) des Fluidschlauchs (100) zum Leiten des Fluids begrenzt, wobei die Sperrschicht (107) ausgebildet ist, eine Diffusion von Gas durch die Sperrschicht (107) zu reduzieren, und wobei die Sperrschicht (107) ein Polyarylamid (PARA) umfasst;
Extrudieren (203) einer Zwischenschicht (105) auf der Sperrschicht (107), wobei die Zwischenschicht (105) ein Elastomer umfasst,
Anordnen (205) eines Festigkeitsträgers (103) auf der Zwischenschicht (105); und
Extrudieren (207) einer Außenschicht (101) auf dem Festigkeitsträger (103), wobei die Außenschicht (101) ein Elastomer umfasst.
